# DEMANDE DE BREVET EUROPEEN

(11) **EP 0 559 596 A1**
(43) Date de publication de la demande: **08.09.1993**
(21) Numéro de dépôt: 93490003.6
(22) Date de dépôt: 05.03.1993
(51) Int. Cl.: A23K 1/10, A23J 1/10

(54) **Procédé de fabrication de farine alimentaire animale à partir de sous-produits d'abattoirs de volailles, installation permettant la mise en oeuvre du procédé et farine alimentaire animale ainsi obtenue**

(30) Priorité: 05.03.1992 FR 9203065
(71) Demandeur: EURO-PROCESS, Société Anonyme :, F-60260 Lamorlaye (FR)
(72) Inventeur: Roze, Jean-Yves, F-60260 Lamorlaye (Oise) (FR)
(74) Mandataire: Duthoit, Michel Georges André

(57) **Abrégé**

L'invention est relative à un procédé de fabrication de farine alimentaire animale à partir de plumes et autres sous-produits d'abattoirs de volailles, ainsi qu'à une installation permettant la mise en oeuvre du procédé et à une farine alimentaire animale ainsi obtenue.

Elle trouvera son application dans le domaine de la nourriture pour animaux.

Dans le procédé de l'invention, on mène une hydrolyse enzymatique au moins partielle des plumes couplée à une action mécanique avant leur mélange avec les autres sous-produits.

## Description

L'invention est relative à un procédé de fabrication de farine alimentaire animale à partir de sous-produits d'abattoirs de volailles, à une installation permettant la mise en oeuvre du procédé et à une farine alimentaire animale ainsi obtenue.

La présente invention trouvera notamment son application dans le domaine de la nourriture pour animaux.

Les sous-produits d'abattoirs de volailles sont constitués par tout ce que ne mange pas l'homme et représentent des volumes importants, de l'ordre de 20 à 25% des quantités traitées, ce qui représente une charge pour les entreprises concernées.

Ces sous-produits sont constitués par les plumes, les sous-produits d'éviscération, tels que le sang et les viscères, ainsi que les sous-produits de découpe, tels que par exemple les pattes, les os, la tête. Ces matières comportent un taux d'humidité de l'ordre de 60 % à 75 % ce qui est une cause d'instabilité de ces sous-produits.

Ceci constitue une réelle gêne pour les abatteurs car ils doivent évacuer rapidement les sous-produits et le faire parfois à titre onéreux auprès d'équarrisseurs.

Pour rentabiliser l'opération, les équarrisseurs effectuent le traitement des sous-produits d'éviscération et/ou de découpe, par cuisson à une température de l'ordre de 120 °C pour produire des farines de viande.

Ces farines sont ensuite revendues pour constituer la base d'aliments pour toutes sortes d'animaux tels que volailles ou encore animaux domestiques. Cependant, le problème reste entier pour l'utilisation des plumes qui, à ce jour, n'ont qu'un faible intérêt.

Cela étant, l'analyse de la situation montre que les sous-produits d'abattoirs de volailles constituent un produit à valoriser qui ne devrait plus constituer un handicap pour les abattoirs de volailles si un recyclage de ces sous-produits était envisageable. Au contraire, ces sous-produits traités pourraient constituer un plus pour les abatteurs qui utiliseraient alors quasiment 100 % des quantités traitées.

Le but de la présente invention est de proposer un procédé de fabrication de farine alimentaire animale à partir de sous-produits des abattoirs de volailles, qui permette aux abatteurs de valoriser ces sous-produits par un traitement intégré chez eux en devenant autonome dans des conditions favorables sur le plan technico-économique.

Un des buts de la présente invention est de proposer un procédé de fabrication de farine alimentaire animale qui puisse être exploité directement dans les abattoirs en sortie des chaînes d'abattage et qui permette d'intégrer ce traitement dans la rentabilité de l'abattoir.

Un autre but de la présente invention est de proposer un procédé de fabrication de farine alimentaire animale qui permette d'obtenir un produit fini de bonne valeur biologique, sans pollution, et utilisant tous les sous-produits d'abattoirs.

Un autre but de la présente invention est de proposer une installation de fabrication de farine alimentaire, autorisant la mise en oeuvre du procédé de la présente invention, qui soit d'un investissement raisonnable et qui permette une rentabilité à très court terme compte tenu de la valorisation des sous-produits.

Un autre but de la présente invention est de proposer une farine alimentaire animale, obtenue à partir des sous-produits d'abattoirs de volailles, dont l'exploitation est facile et adaptée à la nourriture des animaux domestiques ou des volailles malgré les différents composants de la farine et l'utilisation des plumes.

En effet, un des buts de la présente invention est de proposer un procédé de fabrication de farine alimentaire animale qui présente une bonne digestibilité et qui autorise une constance dans la composition de la farine et de ses valeurs énergétiques.

Ainsi, le procédé de la présente invention permet de bénéficier notamment des avantages suivants :
- une rapidité de mise en oeuvre permettant d'obtenir une farine alimentaire de meilleure qualité,
- une réduction de la consommation d'énergie nécessaire à la mise en oeuvre du procédé,
- un recyclage des enzymes mis en oeuvre pour l'hydrolyse au moins partielle des plumes permettant de diminuer le coût du procédé.

D'autres buts et avantages de la présente invention apparaîtront au cours de la description qui va suivre, qui n'est cependant donnée qu'à titre indicatif et qui n'a pas pour but de la limiter.

Le procédé de l'invention, pour la fabrication de farine alimentaire animale à partir de plumes et autres sous-produits d'abattoirs de volailles, tels que notamment ceux d'éviscération et/ou de découpage, dans lequel on met en oeuvre une hydrolyse des plumes et on broyé les autres sous-produits avec les plumes hydrolysées, est caractérisée par le fait que l'on mène une hydrolyse enzymatique au moins partielle des plumes couplée à une action mécanique avant leur mélange avec les autres sous-produits.

L'hydrolyse partielle des plumes permet avantageusement d'améliorer leur digestibilité et de pouvoir bénéficier de leur valeur alimentaire d'une façon importante.

Aussi, selon la présente invention, la farine alimentaire animale, obtenue par la mise en oeuvre du procédé, est composée de plumes hydrolysées au moins partiellement et autres sous-produits d'abattoirs de volailles broyés.

Selon une caractéristique additionnelle du procédé de l'invention, on sépare le mélange pré-hydrolysé et mixé en deux phases, liquide et pré-hydrolysé, et on recycle la phase liquide contenant de l'enzyme pour un cycle ultérieur.

L'installation de fabrication de farine alimentaire à partir de plumes et autres sous-produits d'abattoirs de volailles, autorisant la mise en oeuvre du procédé de la présente invention comporte, des moyens pour hydrolyser les plumes, des moyens pour broyer et mélanger les plumes hydrolysées avec les autres sous-produits, et est caractérisée par le fait qu'il comprend des moyens pour hydrolyser au moins partiellement des plumes, et des moyens pour coupler une action mécanique à l'hydrolyse partielle des plumes préalablement à leur mélange avec les autres sous-produits.

La présente invention sera mieux comprise à la lecture de la description suivante accompagnée de la planche de dessin en annexe qui en fait partie intégrante, sur laquelle on a représenté schématiquement les différentes étapes du procédé de la présente invention.

L'invention vise un procédé de fabrication de farine alimentaire animale à partir de sous-produits d'abattoirs de volailles tels que notamment plumes, sang, viscères, pattes, têtes.

D'une façon générale, on fera la distinction entre les plumes d'une part et d'autre part les sous-produits d'éviscération et/ou de découpe, appelés plus largement autres sous-produits d'abattoirs de volailles.

L'étape préalable du procédé de la présente invention consiste dans une étape d'hydrolyse, au moins partiellement, des plumes avant leur mélange avec les autres sous-produits. Cette étape permet de casser la Kératine et d'engendrer une digestibilité apparente des plumes afin de profiter des protéines animales qu'elles contiennent.

Ce traitement des plumes peut s'effectuer aussitôt l'abattage de sorte que l'extrait sec du milieu avoisine 10 ou 20 %. Par ailleurs, on peut effectuer cette opération sur des plumes défibrinées ce qui peut faciliter le traitement.

Selon l'invention, on mène une hydrolyse enzymatique, notamment alcaline, couplée à une action mécanique.

En particulier, on mélange dans une cuve les plumes avec de l'eau dans laquelle on ajoute les enzymes et on rend la solution alcaline, à pH sensiblement voisin de 9,5 à 10,5.

Il est à noter que l'on a obtenu de bons résultats en utilisant une enzyme de type protéase dans un milieu alcalin de pH voisin de 10, par adjonction de soude, à une température de 60 °C. On a alors constaté que la digestibilité des plumes était de l'ordre de 78 % par rapport au taux de protéines, soit sensiblement 2 fois plus de valeur alimentaire par rapport à des plumes non hydrolysées.

Pendant cette opération, on chauffe avantageusement le mélange à une température d'environ 60°C, par exemple, et l'on poursuit l'agitation lente pendant 45 à 90 mn. De cette étape, il en résulte des fibres courtes et fragilisées.

On complète le traitement des plumes par une agitation brutale, notamment par mixage à l'aide d'une turbine, pendant 45 à 90 mn afin de déchiqueter les plumes.

Parallèlement à cette étape d'hydrolyse, on pré-broie les autres sous-produits, c'est-à-dire que l'on réalise un broyage grossier des sous-produits d'éviscération et des sous-produits de découpe, même dans un broyeur à couteaux par exemple, permettant de réduire la taille des éléments, notamment des os et des intestins.

On mélange les autres sous-produits ainsi préparés avec le produit issu de l'hydrolyse puis ensuite on broie l'ensemble.

Le mélange pourra s'effectuer dans un mélangeur avec vis d'extraction traditionnel permettant une bonne homogénéïté et garantissant une certaine constance dans la composition de l'ensemble.

Lorsque le mélange a été broyé, il sera nécessaire de le sécher afin d'être en présence du produit obtenu sous forme de farine.

Il peut être envisagé d'utiliser un broyeur puis un séchoir à palettes ou à disques, cependant selon la présente invention, on utilisera avantageusement un broyeur à attrition qui permettra de mener simulantément l'étape de broyage et de séchage. Ce séchage sera effectué pour obtenir un produit final contenant une humidité de l'ordre de 10 à 30 % selon l'utilisation ultérieure de la farine.

Pour faciliter le séchage et pour minimiser le coût du traitement, avantageusement, avant le séchage, on sépare le mélange pré-hydrolysé et mixé en deux phases, une liquide et une pré-hydrolysée, et l'on pourra recycler la phase liquide contenant de l'enzyme pour un cycle ultérieur. De ce fait, on ne sèchera que la phase solide pré-hydrolysée ainsi séparée pour récupérer la farine alimentaire.

La séparation en phase liquide et solide pourra être menée sur un tamis vibrant ou par centrifugation. Cela permettra de récupérer, par exemple, 60% du liquide d'hydrolyse et de réduire ainsi les quantités d'enzymes mises en oeuvre.

Enfin, on mènera sur la farine une action bactéricide et on la portera à une température supérieure à 100 °C pour détruire les bactéries.

L'installation de la présente invention autorisant la mise en oeuvre du procédé décrit précédemment comprend des moyens pour hydrolyser, au moins partiellement, les plumes, des moyens pour mélanger les plumes avec les autres sous-produits, des moyens pour broyer les plumes hydrolysées avec les autres sous-produits et des moyens pour sécher le mélange broyé afin d'obtenir la farine alimentaire.

Les moyens pour hydrolyser les plumes sont constitués par une cuve d'hydrolyse dans laquelle sont prévus des moyens d'agitation lente du mélange et des moyens d'agitation brutale du mélange comme cela a été évoqué précédemment.

A ce sujet, les moyens d'agitation peuvent être constitués par des éléments turbines lent et rapide afin de réaliser les agitations conséquentes.

Pour l'agitation lente, on a par exemple obtenu de bons résultats en utilisant une turbine formée d'un rotor à lames et d'un stator présentant un ensemble de dents intérieures, délimitant entre eux un entrefer que l'on détermine pour favoriser le déchiquetage des plumes. A titre d'exemple, on peut prévoir un stator d'un diamètre intérieur d'environ 500 mm dans lequel le rotor est mis en rotation entre 300 et 500 tours/mn avec un entrefer rotor-stator de l'ordre de 1 à 2 mm.

L'élément d'agitation rapide est constitué par une turbine d'une structure similaire et on a obtenu de bons résultats avec un stator d'environ 180 mm de diamètre intérieur, un rotor à lames tournant à une vitesse comprise entre 2.000 et 5.000 tours/mn ainsi qu'un entrefer rotor-stator de l'ordre de 0,5 mm.

En outre, les rotors sont conçus pour favoriser le mouvement du mélange notamment par la présence, avant les lames, d'un élément de forme hélicoïdale afin de provoquer l'introduction du liquide et de la matière dans la turbine.

Dans un mode de réalisation avantageux de la présente invention, les dits moyens pour sécher le mélange sont constitués par un broyeur à attrition à contre-courant d'air chaud.

Le principe d'un broyeur à attrition réside dans l'auto-broyage par chocs des particules entre elles, et consiste donc à faire circuler dans un circuit d'air le produit à pulvériser qui est progressivement broyé sous l'effet de l'attrition et sous l'effet des chocs dans le broyeur.

Ce broyeur est par exemple constitué d'un corps métallique chemisé, dans lequel un arbre central entraîne des rotors alvéolaires et des disques intercalaires, la circulation d'un courant gazeux, étant assurée par deux ventilateurs installés en partie supérieure et inférieure.

Le produit introduit dans la partie inférieure du broyeur est entraîné par le courant gazeux ascensionnel et tourbillonnant vers la partie supérieure. Un dispositif de recyclage permet aux particules suffisamment broyées d'être introduites dans le circuit de broyage.

Etant donné le courant gazeux utilisé, on mène simultanément le broyage et le séchage des produits. On utilise à cet égard un air chaud par exemple compris entre 250 et 400 °C.

Cette élévation de température permet déjà de détruire un certain nombre de bactéries. Cependant, par sécurité, on pourra réaliser une stérilisation et élever la température de la farine séchée à une valeur supérieure à 100 °C, par exemple dans un appareillage destiné au chauffage et/ou refroidissement de particules en continu.

Le principe d'un tel appareillage consiste à transporter les particules solides le long d'un tube hélicoïdal enroulé sur une colonne de mise en vibrations par des moteurs à balourds.

Le phénomène vibratoire engendre une fluidisation des particules solides qui se déplacent par bonds et par glissements, permettant ainsi le fonctionnement en échangeur thermique.

A cet égard, le tube dans lequel circulent les particules, s'enroulent hélicoïdalement à l'intérieur d'une double enveloppe permettant la circulation d'un fluide caloporteur entre les spires du tube.

A titre d'exemple, grâce à la présente invention, on a obtenu une farine alimentaire animale, en poudre, composée de plumes hydrolysées, au moins partiellement, et autres sous-produits d'abattoirs de volailles broyés dont la composition était la suivante :
- protéines : 51 %,
- lipides : 38 %,
- sels minéraux : 11 %,
- absence totale de salmonelles.

Bien évidemment, la composition des farines obtenues dépend des matières premières et de leur constance.

Par ailleurs, d'autres mises en oeuvre de la présente invention, à la portée de l'homme de l'art, auraient pu être envisagées sans pour autant sortir du cadre de la présente demande.

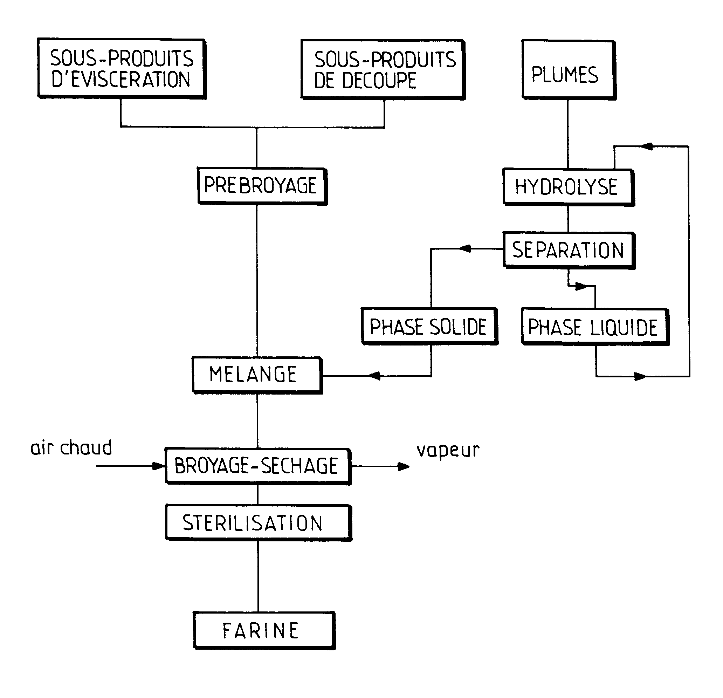

## Revendications

1. Procédé de fabrication de farine alimentaire animale à partir de plumes et autres sous-produits d'abattoirs de volailles, tels que notamment ceux d'éviscération et/ou de découpage, dans lequel on met en oeuvre une hydrolyse des plumes et on broye les autres sous-produits avec les plumes hydrolysées, caractérisé par le fait que l'on mène une hydrolyse enzymatique au moins partielle des plumes couplée à une action mécanique avant leur mélange avec les autres sous-produits.

2. Procédé selon la revendication 1, caractérisé par le fait que l'on sépare le mélange préhydrolysé et mixé en deux phases, liquide et pré-hydrolysé, et on recycle la phase liquide contenant de l'enzyme pour un cycle ultérieur.

3. Procédé selon la revendication 1, caractérisé par le fait que l'on mélange les plumes dans un milieu enzymatique alcalin par une agitation lente et en fin d'étape d'hydolyse on soumet le mélange à une agitation brutale.

4. Procédé selon la revendication 1, caractérisé par le fait que l'on pré-broye les autres sous-produits et on les mélange avec le produit issu de l'hydrolyse puis on broyé l'ensemble.

5. Procédé selon la revendication 2, caractérisé par le fait que l'on sèche la phase solide ainsi séparée pour récupérer la farine alimentaire.

6. Procédé selon la revendication 5, caractérisé par le fait que l'on porte la farine à une température supérieure à 100 °C pour détruire les bactéries.

7. Installation de fabrication de farine alimentaire à partir de plumes et autres sous-produits d'abattoirs de volailles, autorisant la mise en oeuvre du procédé selon l'une quelconque des revendications 1 à 6, comprenant des :
- moyens pour hydrolyser les plumes,
- moyens pour broyer et mélanger les plumes hydrolysées avec les autres sous-produits, caractérisée par le fait qu'il comprend :
- des moyens pour hydrolyser au moins partiellement des plumes,
- des moyens pour coupler une action mécanique à l'hydrolyse partielle des plumes préalablement à leur mélange avec les autres sous-produits.

8. Installation selon la revendication 7, caractérisée par le fait que les moyens pour hydrolyser les plumes sont constituées par une cuve d'hydrolyse dans laquelle sont prévus des moyens d'agitation lente du mélange et des moyens d'agitation brutale du mélange.

9. Installation selon la revendication 7, caractérisée par le fait que les dits moyens pour sécher sont constitués par un broyeur à attrition à contre-courant d'air chaud.

10. Farine alimentaire animale, obtenue par la mise en oeuvre du procédé selon la revendication 1, composée de plumes hydrolysées au moins partiellement et autres sous-produits d'abattoirs de volailles broyés.
